# EUROPÄISCHE PATENTANMELDUNG

(11) **EP 1 762 494 A2**
(43) Veröffentlichungstag der Anmeldung: **14.03.2007**
(21) Anmeldenummer: 06120292.5
(22) Anmeldetag: 07.09.2006
(51) Int. Cl.: B65B 51/04, A22C 11/02

(54) **Verschließklammer**

(30) Priorität: 08.09.2005 DE 102005042856
(71) Anmelder: Frans Vermee GmbH, 53424 Remagen (DE)
(72) Erfinder: Vermee, Frans, 53424 Remagen (DE); Wihl, Klaus, 53424 Remagen (DE)
(74) Vertreter: von Kirschbaum, Alexander

(57) **Zusammenfassung**

Eine Verschließklammer zum Verschließen von einem mit Gut, insbesondere Lebensmittel, gefüllten Schlauchverpackungen (64) weist zwei Verschließelemente (10, 26) auf. Die beiden Verschließelemente sind durch Rastelemente (34, 48) miteinander verbindbar. In einem der Verschließelemente (26) ist ein Aufnahmeraum (50) ausgebildet. Der Aufnahmeraum (50) dient zur Aufnahme von Verpackungsmaterial (28) der Schlauchverpackung. Innerhalb des Aufnahmeraumes (50) ist bei verbundenen Verschließelementen (10, 26) ein Quetschelement (24) angeordnet. Durch das Quetschelement (24) wird das Verpackungsmaterial (28) zusammengedrückt, um eine gleichmäßige Flächenpressung auf das Verpackungsmaterial (28) auszuüben und um ein dichtes und sicheres Halten der Verschließklammer zu gewährleisten.

## Beschreibung

Die Erfindung betrifft eine Verschließklammer zum Verschließen von einem mit Gut, insbesondere Lebensmittel, gefüllten Schlauchverpackungen. Die Schlauchverpackungen können auch mit chemischen Produkten, wie Silikon, Klebstoff oder Sprengstoff befüllt sein.

Zum Herstellen von Schlauchverpackungen werden diese mit dementsprechendem Gut gefüllt und in regelmäßigen Abständen mit einer Verschließklammer aus Metall verschlossen. Bei den Schlauchverpackungen handelt es sich um schlauchförmiges Endlosmaterial, wobei die Verschließklammern derart angeordnet werden, dass abwechselnd zwischen zwei aufeinander folgenden Verschließklammern eine mit Gut befüllte Schlauchverpackung und ein ungefüllter Schlauchabschnitt ausgebildet sind. Um eine einzelne mit Gut befüllte Schlauchverpackung herzustellen, kann nach dem Verschließen mit den Verschließklammern die Schlauchverpackung in dem ungefüllten Abschnitt durch Zerschneiden zertrennt werden.

Um einen ungefüllten Abschnitt zu erzeugen, in dem die Verschließklammern angeordnet werden, ist es beispielsweise aus US 4 939 88 5 bekannt Verdrängerplatten vorzusehen. Mit Hilfe der Verdrängerplatten wird in einem Abschnitt des vollständig mit Gut gefüllten Schlauchs das Gut verdrängt, insbesondere zur Seite gedrückt, so dass durch die Verdrängerplatten ein unbefüllter Schlauchabschnitt entsteht. In diesem Schlauchabschnitt können sodann die beiden Verschließklammern angeordnet werden, wobei anschließend das Schlauchmaterial zwischen den beiden Verschließklammern durchtrennt werden kann.

Das Material der Verschließklammern ist üblicherweise Metall. Dies hat den Nachteil, dass die Schlauchverpackung die üblicher Weise aus Kunststoffmaterial besteht, nicht bzw. nur unter großem Aufwand recyclingfähig ist. Insbesondere bei Lebensmitteln hat das Vorsehen von Verschließklammern aus Metall ferner den Nachteil, dass eine Kontaminierungsgefahr des Lebensmittels besteht. Unabhängig hiervon besteht der Nachteil, dass beispielsweise bei einer oxidierten Verschließklammer das Produkt vom Kunden nicht mehr akzeptiert wird.

Aus WO 02/100732 sind ferner Verschließklammern aus Kunststoff bekannt. Diese Verschließklammern werden ähnlich eines Kabelbinders mit Hilfe von Rastelementen an ihren Enden miteinander verbunden. Die Verschließklammern werden somit in Form einer Schlaufe um den zu schließenden Bereich der Schlauchverpackung gelegt und sodann zusammen gezogen. Um ein dichtes Verschließen der Schlauchverpackung und ein Herunterrutschen der Verschließklammern zu vermeiden, müssen von den Verschließklammern große Kräfte aufgebracht werden. Dies ist bei den in WO 02/100732 beschriebenen Verschließklammern, insbesondere bei größeren Schlauchverpackungen bei denen eine große Menge Verpackungsmaterial zusammen gequetscht werden muss, problematisch.

Aufgabe der Erfindung ist eine Verschließklammer zu schaffen, mit der ein sicheres Verschließen von Schlauchverpackungen gewährleistet ist.

Die Lösung der Aufgabe erfolgt erfindungsgemäß durch die Merkmale des Anspruchs 1.

Die erfindungsgemäße Verschließklammer weist mindestens zwei Verschließelemente auf. Die beiden Verschließelemente weisen zum Verbinden Rastelemente auf. Eines der Verschließelemente weist erfindungsgemäß einen Aufnahmeraum auf, in dem nach verbundenen Verschließelementen, dass insbesondere zusammengeraffte oder zusammengedrückte Verpackungsmaterial angeordnet ist. Um ein sicheres Verschließen der Schlauchverpackung zu gewährleisten, ist in dem Aufnahmeraum ferner ein Quetschelement vorgesehen. Durch das Quetschelement wird das Verpackungsmaterial beim Verbinden der Verschließelemente zusammengedrückt. Auf Grund der zumindest zweiteiligen Ausgestaltung der Verschließklammer durch Vorsehen von mindestens zwei Verschließelementen ist ein sicheres Verbinden bei den Verschließelementen durch Rastelemente möglich. Hierbei sind die Rastelemente derart ausgebildet, dass die durch das zusammengedrückte Verpackungsmaterial aufgebrachte Kraft ein Auseinanderdrücken oder Auseinanderrutschen der Verschließelemente vermeidet.

Ein wesentliches Element der Erfindung ist ferner das Quetschelement, durch das eine vorzugsweise gleichmäßige Flächenpressung auf das Verpackungsmaterial in dem Aufnahmeraum ausgeübt wird. Auf Grund der gleichmäßigen Flächenpressung ist ein dichtes Verschließen der Schlauchverpackung gewährleistet. Hierbei wird unter gleichmäßiger Flächenpressung eine Flächenpressung verstanden, die über den Querschnitt um weniger als 20%, insbesondere weniger als 10% schwankt.

Der Aufnahmeraum zur Aufnahme des Quetschelements kann im Vergleich zu der Gesamtbreite der Verschließklammer relativ große Ausmaße aufweisen. Beispielsweise kann der Aufnahmeraum sich über mehr als die Hälfte der Gesamtbreite der Verschließklammer erstrecken. Durch einen solchen relativ großen Hohlraum ist es möglich, ein ebenfalls relativ großes Quetschelement zu verwenden, so dass das Aufbringen größerer elastischer Kräfte zum Festhalten des Verpackungsmaterials ermöglicht ist. Weiterhin ermöglicht ein größeres Quetschelement eine flexiblere Anpassung an die Größe oder die Stärke des verwendeten Verpackungsmaterials. Darüber hinaus ist es möglich, bei größeren und/ oder stärkeren Verpackungsmaterialien die Größe des verwendeten Quetschelementes anzupassen, ohne dass die Größe der Verschließelemente verändert werden muss.

Besonders bevorzugt ist es, dass die Verschließelemente einen in Längsrichtung gleichmäßigen Querschnitt aufweisen. Dadurch sind sie beispielsweise zur Herstellung in einem Extrusionsverfahren geeignet. Weiterhin ist es bevorzugt, dass das Quetschelement einen in Längsrichtung gleichmäßigen Querschnitt aufweist.

Das Quetschelement ist vorzugsweise aus elastischem Material, insbesondere aus einem elastischen Kunststoff. Bevorzugt ist ein thermoplastischer Kunststoff, der insbesondere bis zu 150 °C thermoplastisch ist.

Die Verschließklammern sind vorzugsweise aus Kunststoff, insbesondere PA6 hergestellt.

Zur Herstellung einer Schlauchverpackung mit Hilfe der erfindungsgemäßen Verschließklammern wird somit beispielsweise ein Endlosschlauch mit Gut befüllt. Anschließend werden mit Hilfe von Verdrängungsplatten wie sie beispielsweise in US 4 939 885 beschrieben sind zwischen befüllten Abschnitten unbefüllte Abschnitte durch Verdrängen des in dem Schlauch befindlichen Gutes erzeugt. In den unbefüllten Abschnitten werden sodann Verschließklammern vorgesehen. Hierzu werden insbesondere zwei Verschließelemente in dem Bereich der unbefüllten Abschnitte zugeführt und miteinander verbunden. Das Verbinden der Verschließelemente erfolgt dadurch das die beiden Verschließelemente aufeinander zu bewegt und zusammengedrückt werden, wobei die Rastelemente einrasten und das Verpackungsmaterial in dem Aufnahmeraum angeordnet und hier mit Hilfe des Quetschelementes zusammengerückt wird. Hierbei erstreckt sich der Aufnahmeraum vorzugsweise in Längsrichtung der Schlauchverpackung. Nach dem Verschließen der Schlauchverpackung beispielsweise durch zwei nebeneinander angeordnete Verschließklammern in einem unbefüllten Abschnitt können die Schlauchverpackungen zwischen den beiden Verschließklammern auseinander geschnitten werden. Da erfindungsgemäß die Verschließklammern vorzugsweise aus Kunststoff hergestellt sind, ist es auch möglich, in einem unbefülltem Abschnitt eine einzige Verschließklammer vorzusehen und diese sodann zusammen mit dem Verpackungsmaterial zu durchtrennen.

Um ein sicheres Verschließen der Schlauchverpackung zu gewährleisten und ein Abrutschen der Verschließklammer zu verhindern ist die Geometrie des Aufnahmeraumes sowie des Quetschelementes derart aufeinander abgestimmt, dass bei miteinander verbundenen Verschließelementen eine gleichmäßige Flächenpressung auf das Verpackungsmaterial erzeugt wird. Hierbei ist insbesondere zu berücksichtigen, dass das Verpackungsmaterial nicht gleichmäßig im Aufnahmeraum verteilt ist. Um eine möglichst gleichwertige Flächenpressung zu erzielen, ist vorzugsweise eine Innenwand des Aufnahmeraums konkav ausgebildet, wobei die gegenüberliegende Andrückseite des Quetschelementes vorzugsweise konvex ausgebildet ist. Beim Verbinden der Verschließelemente ist insbesondere im mittleren Bereich der konvexen Andrückfläche mit einer Anhäufung von Verpackungsmaterial zu rechnen. Dieses wird sodann nach außen in Bereiche mit geringeren Mengen an Verpackungsmaterial gedrückt um eine gleichmäßige Flächenpressung zu erzielen.

Beim Verbinden der beiden Verbindungselemente wird das Quetschelement vorzugsweise in eine Öffnung des Aufnahmeraumes eingesteckt. Die Öffnung des Aufnahmeraumes erstreckst sich vorzugsweise über die gesamte Länge des Verschließelementes.

Um ein einfaches Einführen des Quetschelementes in den Aufnahmeraum zu gewährleisten, ist vorzugsweise die Reibung der beim Verbinden aneinander gleitenden Seitenwände bzw. Außenseiten des Aufnahmeraumes bzw. des Quetschelementes reduziert.

Die Reduzierung der Reibung erfolgt vorzugsweise durch Verringerung der Anlageflächen. Dies kann beispielsweise dadurch erfolgen, dass eine der beiden gegenüberliegenden Flächen gewellt ausgebildet ist. Vorzugsweise sind zur Reibungsreduzierung die Außenseiten des Quetschelementes konkav ausgebildet. Dies hat zur Folge, dass beim Einführen des Quetschelementes in den Aufnahmeraum nur an den Vorderkanten des Quetschelementes Reibung auftritt und somit ein einfaches Einführen möglich ist. Auf Grund der Elastizität des Quetschelementes und der beim Verbinden auftretenden Verformung des Quetschelementes wird die Konvexität dieser Außenseiten verringert und die Außenseiten des Quetschelementes vorzugsweise an die Seitenwände des Aufnahmeraumes gedrückt.

Um ein Auseinanderrutschen der Verschließelemente, insbesondere in radialer Richtung auf Grund der durch das zusammengepresste Verpackungsmaterial aufgebrachten Kräfte, zu vermeiden, weist ein Verschließelement vorzugsweise Ansätze auf, die das andere Verschließelement teilweise umgreifen. Diese vorzugsweise armförmigen Ansätze umgreifen das andere Verschließelement vorzugsweise derart, dass dieses um mehr als 180 Grad umschlossen ist. Die Ansätze sind vorzugsweise elastisch ausgebildet und weisen einen teilringsförmigen Querschnitt auf.

Besonders bevorzugt ist es an den Enden der Ansätze die Rastelemente vorzusehen, die mit Rastelemente des umgriffenen Verschließelementes zusammenwirken. Hierbei ist die Ausrichtung der Rastelemente vorzugsweise im Wesentlichen derart ausgebildet, dass ein Auseinandergleiten der Rastelemente vermieden ist. Dies kann durch in Kraftrichtung gesehen vorgesehene Hinterschneidungen gewährleistet werden.

Hierbei können die Rastelemente geeignete Flanken aufweisen, die in Kraftrichtung in eine durch eine Ausnehmung gebildete Hinterschneidung eingreifen. Ebenso können die Rastelemente einen beispielsweise teilkreisringförmigen Querschnitt aufweisen, der in entsprechende Ausnehmungen eingreift. Hierbei weist die teilkreisförmige Ausnehmung einen Winkel von mehr als 180 Grad auf, so dass wiederum ein Hinterschneiden auftritt.

Die Herstellung der Verschließelemente erfolgt vorzugsweise durch Extrusion. Die beiden Verschließelemente werden somit vorzugsweise durch Kunststoffextrusion als Strangmaterial hergestellt und sodann beispielsweise in Rollenform bereitgestellt und der Verpackungsmaschine zugeführt. Da das Quetschelement vorzugsweise aus einem anderen Material hergestellt ist, dass eine höhere Elastizität als die Verschließelemente aufweist und das Quetschelement vorzugsweise mit einem der Verschließelemente verbunden ist, erfolgt die Herstellung dieses mit dem Quetschelement verbundenen Verschließelementes vorzugsweise durch ein Ko-Extrusinos-Verfahren.

Die auf Rollen aufgewickelten Verschließelemente können so auf einfache Weise der Verpackungsmaschine im Bereich der unbefüllten Abschnitte zugeführt werden, dort in eine entsprechenden Länge geschnitten und miteinander verbunden werden. Da die Länge der Verschließelemente, die sich in Längsrichtung der Verpackung erstrecken, variabel ist, kann durch ein Vergrößern der Länge der Verschließelemente eine verbesserte Kraftverteilung erzielt werden. Dies ist insbesondere bei vom Verpackungsmaterial erzeugten großen Gegenkräften zweckmäßig.

Ebenso ist es möglich, die einzelnen Verschließelemente vor dem Zuführen in der Verpackungsmaschine in dem Bereich in dem sie miteinander verbunden werden zu schneiden. Ebenso können entsprechende Verschließelemente einzeln hergestellt werden. Das einzelne Herstellen der Verschließelemente kann sodann auch im Spritzgussverfahren erfolgen. Vorzugsweise sind einzeln hergestellte Verschließelemente über ein Verbindungsmittel wie einen Faden oder ein Klebeband miteinander verbunden. Hierdurch ist es möglich, einzelne Verbindungsmittel als Band in der Verpackungsmaschine in den entsprechenden Bereich zuzuführen. Derartige mit einem Verbindungsmittel verbundene Verschließelemente können wiederum als Rolle bereit gestellt werden.

Das Zuführen der Verschließelemente in der Verpackungsmaschine kann sowohl horizontal als auch vertikal erfolgen.

Nachfolgend wird die Erfindung anhand einer bevorzugten Ausführungsform unter Bezugnahme auf die anliegenden Zeichnungen näher erläutert.

Es zeigen:
- Fig. 1: eine schematische, perspektivische Ansicht eines ersten Verschließelementes,
- Fig. 2: eine schematische Schnittansicht des in Fig. 1 dargestellten ersten Verschließelementes,
- Fig. 3: eine schematische, perspektivische Ansicht des zweiten Verschließelementes,
- Fig. 4: eine schematische Schnittansicht des in Fig. 3 dargestellten zweiten Verschließelementes,
- Fig. 5: eine schematische Schnittansicht der zusammengefügten Schließelemente,
- Fig. 6: eine schematische Draufsicht von mit Verschließklammern verschlossenen Schlauchverpackungen, und
- Fig. 7 bis Fig. 9:: schematische Darstellungen Ausführungsformen erfindungsgemäßer Schließklammern.

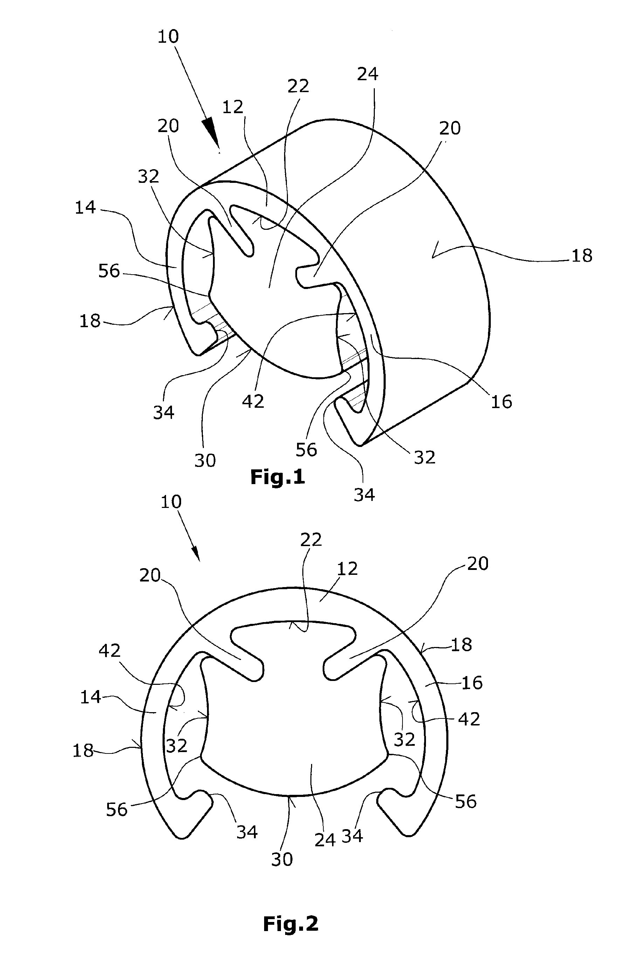

Ein erstes Verschließelement 10 ist im wesentlichen teilringförmig ausgebildet und weist einen Mittelteil 12 auf, mit dem zwei als Hebelarme ausgebildete Ansätze 14, 16 verbunden sind. Eine Außenkontur 18 des ersten Verschließelementes 10 entspricht im Querschnitt im wesentlichen einer Kreislinie. An dem Mittelteil 12 sind zwei nach innen ragende Stegteile 20 angeordnet. Die Stegteile 20 sind aufeinander zugerichtet, so dass zwischen den Stegteilen 20 und dem Mittelteil 12 keilförmige Bereiche entstehen. An einer Innenseite 22 des Mittelteils 12 ist innerhalb des Verschließelementes 10 ein Quetschelement 24 angeordnet. Da das Quetschelement 24 vorzugsweise aus einem anderen Material als das Verbindungselement 10 hergestellt ist und somit eine sichere Verbindung zwischen den beiden Teilen an der Innenseite 22 gewährleistet sein soll, sind die Stegteile 20 vorgesehen um eine Herausrutschen des Quetschelementes 24 (Figur 2) zu vermeiden.

Da das Verschließelement 10 und das Quetschelement 24 vorzugsweise im Ko-Extrusionsverfahren hergestellt sind, weist das Verschließelement 10 auf der gesamte Länge den gleichen Querschnitt auf.

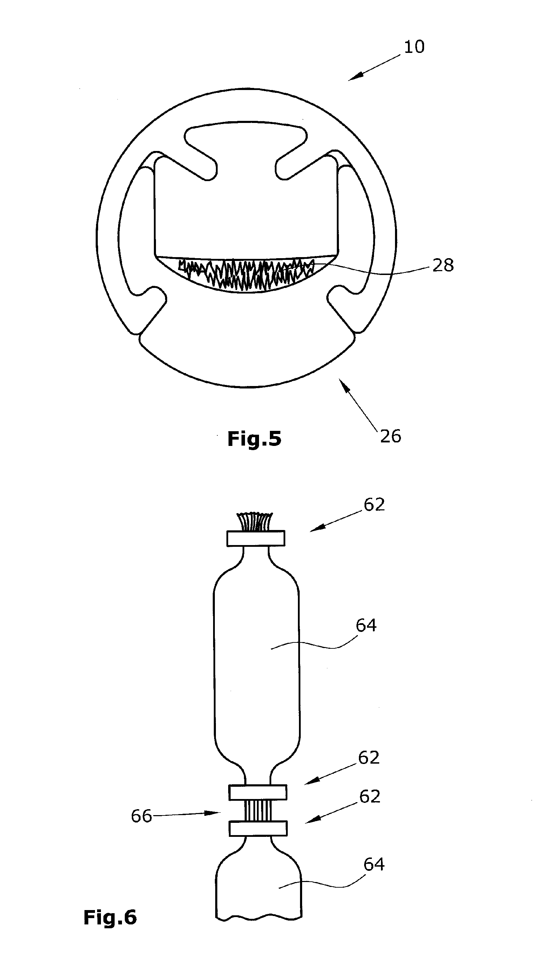

Das Quetschelement 24 besteht aus einem elastischen Kunststoff, der beim Verbinden der Verschließelemente 10, 26 (Fig. 5) durch Verpackungsmaterial 28 verformt wird. Das Quetschelement 24 weist eine konvexe Andrückseite 30 (Fig. 2) sowie konkav ausgebildete Außenseiten 32 auf.

An den armförmigen Ansätzen 14, 16 des ersten Verschließelementes 10 sind im wesentlichen radial nach innen ausgerichtete Rastelement in Form von Rastnasen 34 vorgesehen.

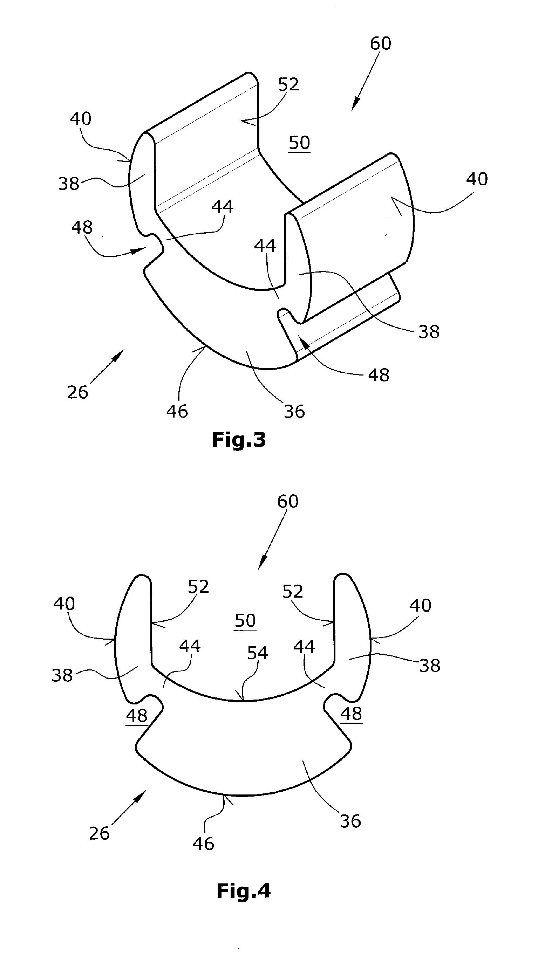

Das zweite Verbindungselement 26, dass aus dem selben Material wie das erste Verschließelement 10 hergestellt sein kann, ist im wesentlichen U-förmig ausgebildet. Ein Mittelteil 36 (Fig.4) ist mit zwei armförmigen Ansätzen 38 verbunden. Die Ansätze 38 weisen eine bogenförmige Außenseite 40 auf, deren Radius dem Radius einer Innenseite 42 (Fig.2) der Ansätze 16 des ersten Verschließelementes 10 entsprechen. Die Ansätze 38 sind über Verbindungsstege 44 mit dem Mittelteil 36 (Fig. 4) verbunden. Das Mittelteil 36 weist eine bogenförmige Außenseite 46 auf, deren Radius im wesentlichen dem Radius der Außenseite 18 (Fig. 2) des ersten Verschließelementes 10 entsprechen. Dies hat zur Folge, dass in verbundenem Zustand (Fig. 5) die beiden Verschließelemente 10, 26 eine insgesamt ringförmige Außenseite aufweisen. Zwischen dem Mittelteil 36 und den Ansätzen 38 ist im Bereich der stegförmigen Verbindungen 44 jeweils eine Ausnehmung 48 vorgesehen die als Rastelemente dienen und in die die Rastnasen 44 in verbundenem Zustand eingreifen.

Zwischen den beiden Ansätzen 38 des zweiten Verschließelementes 26 ist ein Aufnahmeraum 50 ausgebildet, in den das Quetschelement 24 eingesteckt wird. Der Aufnahmeraum weist ebene Seitenwände 52 auf, die an den Innenseiten der Ansätze 38 ausgebildet sind. Die Innenseite 54 des Mittelteils 36 ist konkav ausgebildet, wobei die Innenwand 54 der Andrückseite 30 des Quetschelementes 24 in verbundenem Zustand gegenüber liegt.

Der Abstand zwischen den beiden Seitenwänden 52, die den Aufnahmeraum 50 seitlich begrenzen, entspricht dem Abstand der vorderen Kanten 56 (Fig. 2) des Quetschelementes. Beim Einschieben des Quetschelementes 24 in den Aufnahmeraum 54 liegen zur Reibungsreduzierung somit zunächst nur die Kanten 56 an den Seitenwänden 52 an.

Zum Verschließen einer Schlauchverpackung wird zunächst das mit Gut gefüllte Schlauchmaterial mit Hilfe von Verdrägungsplatten verdrängt, bzw. zur Seite gedrückt um unbefüllte Abschnitte zu erzeugen. Dies kann beispielsweise mit Hilfe einer Vorrichtung, wie sie in US 4 939 885 beschrieben ist, geschehen. In dem unbefüllten Bereich ist das Schlauchmaterial somit zusammen gerafft und weist einen geringen Querschnitt auf. Das zweite Verschließelement 26 wird im nächsten Schritt derart über den ungefüllten zusammengerafften Abschnitt gesteckt, dass dieser in dem Aufnahmeraum 50 angeordnet ist. In eine Öffnung 60 (Fig. 4) des Aufnahmeraumes wird sodann das mit dem ersten Verschließelement 10 verbundene Quetschelement 24 eingeführt. Hierdurch wird das Verpackungsmaterial 28 zusammengedrückt (Fig. 5). Gleichzeitig werden die Ansätze 14, 16 (Fig. 2) des ersten Verschließelementes nach außen gedrückt bis die Rastnasen 34 in die Ausnehmungen 48 einrasten und somit ein festes Verbinden des ersten Verschließelementes 10 mit dem zweiten Verschließelementes 26 gewährleistet ist. Aufgrund des Verpackungsmaterials 28, das durch das Quetschelement 24 zum dichten Verschließen der Schlauchverpackung stark zusammen gedrückt wird, erfolgt eine Verformung des elastischen Quetschelementes 24 wie in Fig. 5 dargestellt. Hierbei wird die Konvexität der Andrückseite 30 (Fig. 2) verringert, wobei das verdrängte Material des Quetschelementes durch eine Verringerung der Konkavität der Außenseiten 32 aufgenommen wird. Die Außenseiten 32 grenzen dann an den Innenwänden 52 an.

Durch das Vorsehen von zwei aus Verschließelementen 10, 26 bestehenden Verschließklammern 62 (Fig. 6) werden Schlauchverpackungen 64 hergestellt. Die Schlauchverpackungen 64 können in einem Bereich 66 zwischen zwei Verschließklammern auseinander geschnitten werden. Anstatt des Vorsehens von zwei Verschließklammern 62 kann auch eine breitere Verschließklammer vorgesehen werden, die zum Vereinzeln der Schlauchverpackungen 64 im wesentlichen mittig auseinander geschnitten wird.

Je nach Stärke des Verpackungsmaterials muss eine unterschiedliche Menge an Verpackungsmaterial in dem Aufnahmeraum 50 aufgenommen werden. Es wird bevorzugt den nach dem Verbinden der beiden Verschließelemente 10, 26 verbleibenden Teil des Aufnahmeraumes derart zu bemessen, dass einerseits eine ausreichende Flächenpressung gewährleistet ist, andererseits das Verbinden der Verschließelemente 10, 26 gut möglich ist und ein Aufdrücken der Verschließelemente aufgrund der von dem Verpackungsmaterial erzeugten Gegenkraft vermieden ist. Der Rest des verbleibenden Aufnahmeraumes 50 kann auf einfache Weise dadurch variiert werden, dass die Größe des Quetschelementes 24 verändert wird. Dies hat den Vorteil, dass für unterschiedliche Schlauchverpackungen die selben Verschließelemente 10, 26 verwendet werden können und lediglich das Quetschelement 24 angepasst werden muss. Dies hat bei der Herstellung der Verschließelemente 10, 26 den Vorteil, dass nur die Form, für die Herstellung der Quetschelemente 24 veränderbar sein muss. Die Formen zur Herstellung der Verschließelemente 10, 26 können beibehalten werden. Hierdurch können die Kosten erheblich reduziert werden. Die Menge des in dem Aufnahmeraum 50 vorhandenen Verpackungsmaterial variiert nicht nur in Abhängigkeit der Dicke des Materials sondern auch in Abhängigkeit der Menge des Materials, die beispielsweise bei größeren Verpackungen zunimmt.

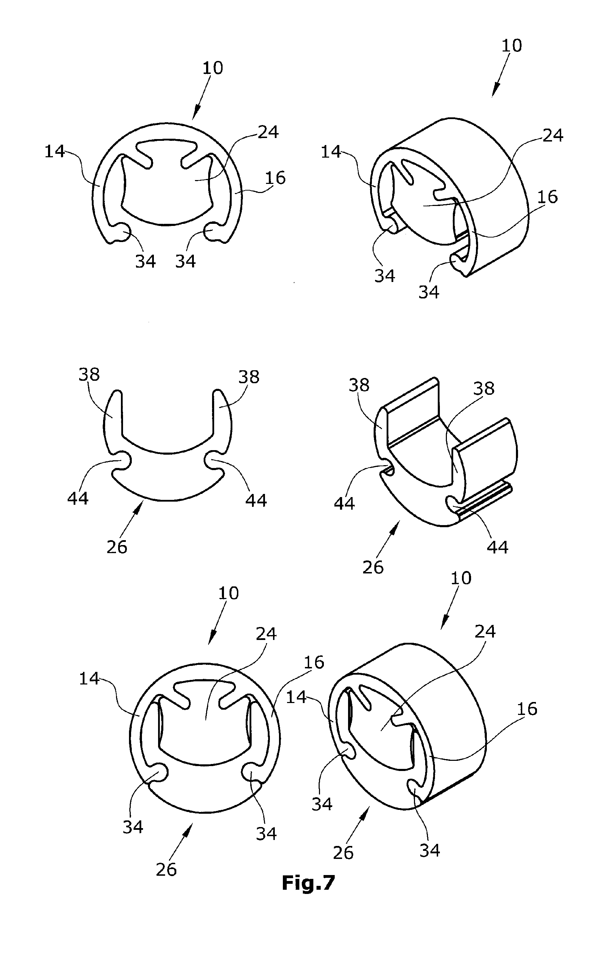

Aus den Fig. 7 bis 9 sind weitere Ausführungsformen der erfindungsgemäßen Verschließklammern ersichtlich. Hierin wurden ähnliche oder identische Elemente mit den selben Bezugszeichen gekennzeichnet. Der wesentliche Unterschied in den hier dargestellten Ausführungsformen besteht in der Ausgestaltung der Rastelemente.

Bei der in Fig. 7 dargestellten Ausführungsform weisen die Rastelemente 34 einen teilkreisförmigen Querschnitt auf. Diese wirken entsprechend mit teilkreisförmigen Ausnehmungen 44 zusammen.

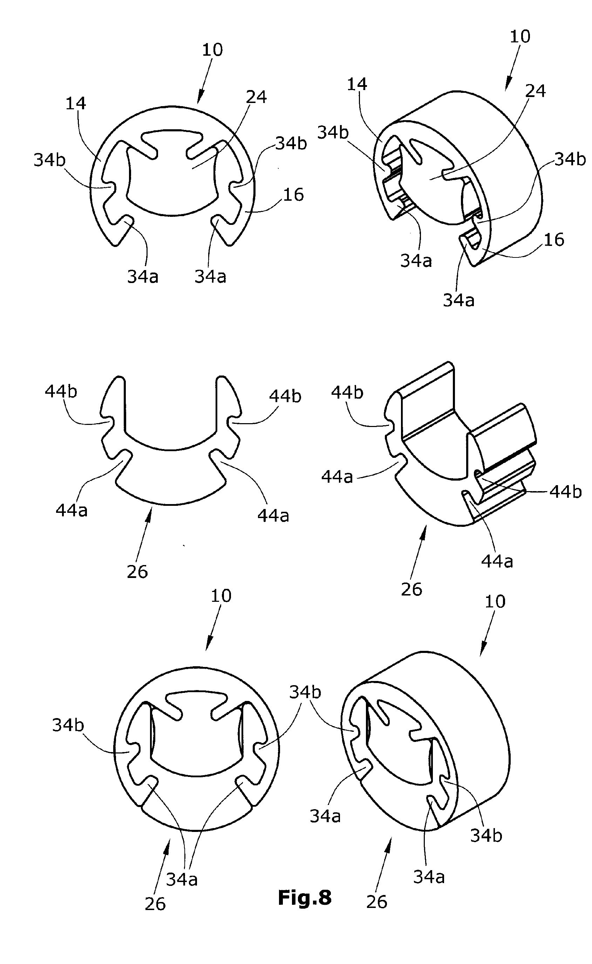

Bei der in Fig. 8 dargestellten Ausführungsform sind insbesondere zur Erhöhung der aufbringbaren Kräfte Rastelementenpaare 34a, 34b, vorgesehen. Wobei die beiden Rastelemente 34a und 34b an den Ansätzen bzw. Armen 16 an deren Innenseite nach innen weisend in einem Abstand zueinander angeordnet sind. Das Rastelementenpaar 34a, 34b wirkt mit entsprechenden Ausnehmungen 44a, 44b, zusammen.

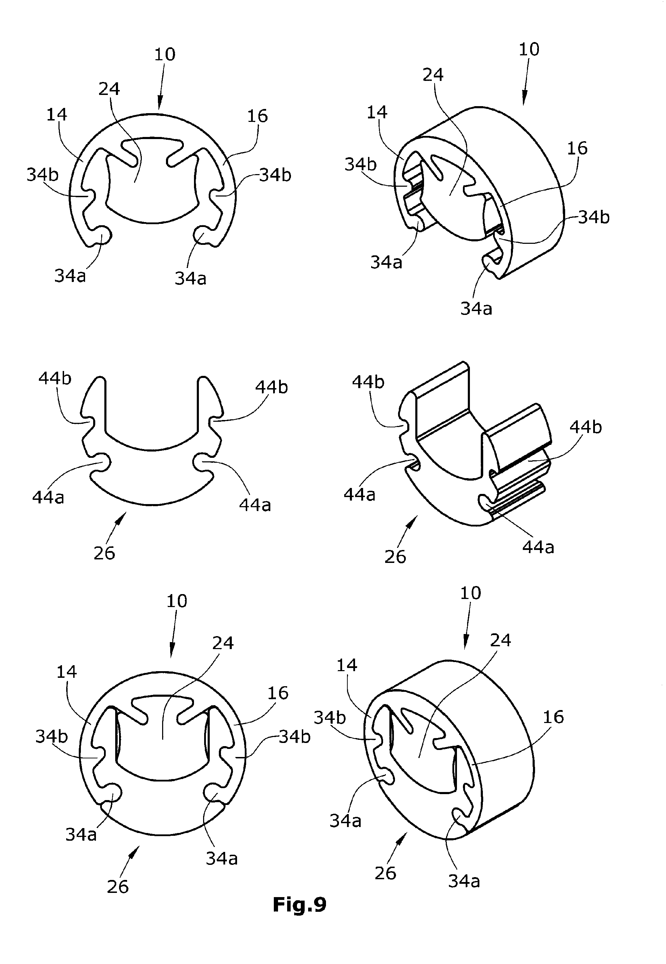

Bei dem in Fig. 9 dargestellten Ausführungsbeispiel ist ebenfalls ein Rastelementenpaar 34a, 34b vorgesehen, wobei das eine Rastelement 34a einen teilkreisringförmigen Querschnitt aufweist. Die Rastelemente 34a und 34b wirken wiederum mit entsprechenden Ausnehmungen 44a und 44b zusammen.

Selbstverständlich können auch weitere Formen der Rastelemente vorgesehen sein, die in Abhängigkeit der aufzubringenden bzw. zu haltenden Kraft ausgebildet sein können. Bei denen in den Figuren dargestellten Rastelementen handelt es sich um bevorzugte Ausführungsformen, die insbesondere auch miteinander kombiniert werden können.

## Patentansprüche

1. Verschließklammer zum Verschließen von mit einem Gut, insbesondere Lebensmittel, gefüllten Schlauchverpackungen (64), mit
zwei Verschließelementen (10, 26) die zum Verbinden Rastelemente (34, 48) aufweisen,
einem von einem Verschließelement (26) gebildetem Aufnahmeraum (50) zur Aufnahme von Verpackungsmaterial (28) und
einem bei verbundenen Verschließelementen (10, 26) in dem Aufnahmeraum (50) angeordneten Quetschelement (24) zum Zusammendrücken des Verpackungsmaterials (28).

2. Verschließklammer nach Anspruch 1, **dadurch gekennzeichnet, dass** das Quetschelement (24) derart ausgebildet ist, dass auf das Verpackungsmaterial (28) eine gleichmäßige Flächenpressung aufgebracht ist.

3. Verschließklammer nach Anspruch 1 oder 2, **dadurch gekennzeichnet, dass** das Quetschelement (24) aus elastischem Material, insbesondere elastischem Kunststoff hergestellt ist.

4. Verschließklammer nach einem der Ansprüche 1 bis 3, **dadurch gekennzeichnet dass**, die Geometrien des Aufnahmeraums (50) und des Quetschelemente (24) zum Aufbringen einer gleichmäßigen Flächenpressung aufeinander abgestimmt sind.

5. Verschließklammern nach einem der Ansprüche 1 bis 4, **dadurch gekennzeichnet, dass** das Quetschelement (24) mit einem Verschließelement (10) fest verbunden ist.

6. Verschließklammer nach einem der Ansprüche 1 bis 5, **dadurch gekennzeichnet, dass** der Aufnahmeraum (50) eine konkave Innenwand (54) aufweist, die bei verbundenen Verschließelementen (10, 26) einer vorzugsweise konvexen Andrückseite (30) des Quetschelementes (24) gegenüber liegt.

7. Verschließklammer nach einem der Ansprüche 1 bis 6, **dadurch gekennzeichnet, dass** das Quetschelement (24) zum Verbinden der Verbindungselemente (10, 26) in einer Öffnung (60) des Aufnahmeraumes (50) einsteckbar ist.

8. Verschließklammer nach einem der Ansprüche 1 bis 7, **dadurch gekennzeichnet, dass** bei verbundenen Verbindungselementen (10, 26) aneinander liegende Seitenwände (52) bzw. Außenseiten (32) des Aufnahmeraumes (50) bzw. des Quetschelementes (24) insbesondere durch Reduzierung der Anlagefläche eine geringe Reibung aufweisen.

9. Verschließklammer nach Anspruch 8, **dadurch gekennzeichnet, dass** die Auflagefläche **dadurch** reduziert ist, dass die Außenseiten (32) des Quetschelementes (24) konkav ausgebildet sind.

10. Verschließklammern nach einem der Ansprüche 1 bis 9, **dadurch gekennzeichnet, dass** eines der Verschließelemente (10) Ansätze (16) aufweist, die das andere Verschließelement (26) teilweise umgreifen.

11. Verschließklammer nach Anspruch 10, **dadurch gekennzeichnet, dass** die Ansätze (16) Rastelemente (34) aufweisen, die mit an dem umgriffenen Verbindungselement (26) vorgesehenen Rastelement (48) zusammenwirken.

12. Verschließklammer nach einem der Ansprüche 1 bis 11, **dadurch gekennzeichnet, dass** die Größe des Quetschelementes (24) an die in dem Aufnahmeraum (54) aufzunehmende Menge an Verpackungsmaterial (28) anpassbar ist.

13. Verschließklammer nach einem der Ansprüche 1 bis 12, **dadurch gekennzeichnet, dass** die Verschließelemente (10, 26) vorzugsweise zusammen mit dem Quetschelement (24) durch Extrusions-Verfahren, insbesondere Ko-Extrusionsverfahren von Kunststoff als Strangmaterial hergestellt sind.
